(19) Europäisches Patentamt
European Patent Office
Office européen des brevets

(11) **EP 2 360 805 B1**

(12) **EUROPEAN PATENT SPECIFICATION**

(45) Date of publication and mention
of the grant of the patent:
**26.08.2015 Bulletin 2015/35**

(51) Int Cl.:
***H02H 1/00*** *(2006.01)*   ***H02H 3/32*** *(2006.01)*
***H02J 13/00*** *(2006.01)*

(21) Application number: **10405032.3**

(22) Date of filing: **19.02.2010**

(54) **Electrical power transmission system of a vehicle.**

Elektrisches Energieübertragungssystem eines Fahrzeugs

Système de transmission d'alimentation électrique d'un véhicule

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**24.08.2011 Bulletin 2011/34**

(73) Proprietor: **Hochschule Luzern Technik &
Architektur
6048 Horw (CH)**

(72) Inventors:
• **Bittner, Markus
8966 Oberwil-Lieli (CH)**
• **Widmer, Dr., Hanspeter
5512 Wohlenschwill (CH)**
• **Dominiak, Stephen
5506 Mägenwill (CH)**

(74) Representative: **Rüfenacht, Philipp Michael et al
Keller & Partner Patentanwälte AG
Eigerstrasse 2
Postfach
3000 Bern 14 (CH)**

(56) References cited:
**EP-A1- 0 463 341**      **DE-A1- 10 012 862**
**DE-C1- 10 149 458**     **US-A- 5 488 532**
**US-A1- 2001 029 433**

## Description

### Technical Field

The invention relates to an electrical power transmission system of a vehicle, for delivering electrical power from an electrical power source to an electrical appliance, wherein a circuit breaker is connected between the electrical power source and a first conductor, which is further connected to the electrical appliance, wherein the electrical power source and the electrical appliance are connected to the chassis of the vehicle, which acts as a conductor for conducting an electrical current between the electrical appliance and the electrical power source.

### Background Art

Aircraft wiring security has received widespread attention in recent years. A wire fault may occur due to a loose connection, a broken wire, or an arc fault. An arc fault can lead to arcing between parallel conductors, to ground, or in series along a conductor. It is estimated that there is at least one "smoke-in-the-cockpit" incident per week in the United States on commercial aircraft. These result in unscheduled landings or even in severe tragedies. Wire fault detection is therefore used in aircraft wiring to improve system safety. Accordingly, circuit breakers provide additional protection, supplemental to thermal overload protection.

Originally, thermal and magnetic circuit breakers were developed to protect the wire insulation on aircraft from damage due to overheating conditions caused by excessive over-current conditions, like - for example - a shortcut in an electric load. However, other conditions can manifest themselves in arcing events or local overheating events that cannot be protected solely by thermal and magnetic devices since the currents in theses conditions do not reach the thresholds need to trip the thermal and magnetic circuit breakers.

In the relatively new AFCI technology (AFCI: arc fault circuit interruption), the electrical circuits are monitored for events that are indicative of potentially unsafe wiring conditions which could result in fires or loss of electrical circuit functionality. When coupled with an interruption mechanism, aircraft wiring safety can be enhanced.

In "Arc Fault Circuit Interruption Requirements for Aircraft Applications", published by Thomas E. Potter and Michael Lavado, P.E., Texas Instruments, Attleboro, www.arc-shield.com, methods for determining and distinguishing between arcing characteristics and normal steady state and transient load conditions on aircraft and the requirements of arc fault detection algorithms to address these conditions are discussed.

Wire bundles in aircraft typically contain between 3 or 4 to more than 50 wires from many different circuits. A catastrophic fault on one wire may damage or impair an entire wire bundle and multiple circuits at the same time.

In known household applications, AFCI technology is designed to provide protection against parallel arcing (line to neutral), series arcing (a loose, broken, or otherwise high resistance segment in a single line), ground arcing (from line, or neutral, to ground), overload protection (for resistive loads such as heaters), and short circuit protection. Arc fault circuit breakers are designed to replace traditional thermal and magnetic circuit breakers in new-production aircraft or may be retrofit into present aircraft circuit breaker panels.

Although AFCI technology has been in service in many household applications for many years, there are significant challenges associated with adapting this technology to operate in aircraft electrical systems. Complicating factors include higher and variable AC line (AC: alternate current) frequencies, the need for DC protection (DC: direct current), and lack of ground return wires required for GFI type (GFI: ground fault interrupter) protection. Aircraft electrical systems are also exposed to a harsh EMI environment (EMI: electromagnetic interference) not found in household applications. Aircraft electrical systems operate at 115 VAC, 400 Hz and incorporate both single and there-phase circuits. In addition to AC power, 28 VDC power is also used. Furthermore, 270 VDC power and variable frequency power with frequency ranges from 200 Hz to 800 Hz is used. AFCI detection algorithms that rely on frequency characteristics may be affected by variable frequency systems, complicating the design of arc fault technology.

In AFCI technology, the current in the wires is actively monitored and analyzed. There exist algorithms, which allow for a classification of the analyzed data. Depending on an actual classification, a wire may be interrupted in order to prevent damage or fire due to a malfunctioning wire. Such interruption may take place within 12 to 25 milliseconds, for example.

The present solutions for detecting wire faults in a power transmission system of a vehicle are based on a complicated analysis of currents transmitted in the system. Such analysis is based particularly on known characteristics of electrical loads and wire faults. However, if new electrical loads or unknown types of wire faults occur, such analysis is unable to correctly distinguish between them. For example, a new type of a hairdryer using new equipment in order to improve efficiency may generate currents very similar to currents known to occur when certain wire faults occur resulting in nuisance trips. On the other hand, for example, a new type of arc fault may generate currents very similar to currents know to occur when a razor or display connected to the power transmission system is turned on. Until the analysis is updated to such new types of electrical loads or wire faults, severe damages to the power transmission system or the vehicle may occur.

The document US 2001/0029433 A1 describes a zone arc fault detection system for detecting arcing faults in a defined zone of an electrical circuit, such as an aircraft circuit. The detection system includes a pair of substantially identical parallel insulated conductors for each zone in which arcing is to be detected. A detection zone is defined by the parallel conductors between end points where the two conductors are coupled together. A current sensor is operatively associated with each pair of parallel conductors. The current sensor and conductors are respectively configured and arranged such that the current sensor produces a signal representative of a difference in current between the two conductors.

## Summary of the invention

It is the object of the invention to create a power transmission system pertaining to the technical field initially mentioned, that is more robust and reliably detects wire faults, particularly also when future, new types of electrical loads are connected to the power transmission system or when future, new types of wire faults occur.

The solution of the invention is specified by the features of claim 1. According to the invention, a second conductor is connected between the circuit breaker and the electrical appliance, wherein the first and the second conductor are electrically isolated and connected in parallel, wherein the first and second conductor are arranged to both transmit electrical power of the electrical power source. A first current sensor is arranged to sense a first current in the first conductor and a second current sensor is arranged to sense a second current in the second conductor. An analysis and control unit is arranged, in order to analyze the first and the second current and to control an operating state of the circuit breaker and/or to indicate a fault state based on the analysis of the first and the second current. A first communication device is arranged at a first coupling point in order to couple a communication signal into respectively out from the first and second conductor and/or the further first and second conductors. A second communication device is arranged at a second coupling point in order to couple a communication signal into respectively out from the first and second conductor and/or the further first and second conductors.

In a power transmission system according to the invention, electrical power is transmitted over a first and a second conductor from the electrical power source to an electrical appliance, When one of these two conductors exhibits a wire fault, like a loose connection or a partial or complete interruption or an arcing condition as described above, the currents in the first and second conductor will differ. Through a simple comparison of the currents in the first and second conductor, a fault in the conductors can be easily detected. Accordingly, an operating status of the circuit breaker is controlled, for example a breaking device is activated in order to interrupt transmission of electrical power through the first and/or the second conductor and/or a fault state is indicated. Hence, a robust detection of wire faults is achieved, because a change in the conducting or insulating properties in at least one of the conductors will instantly lead to a change of the corresponding currents, which - when compared or correlated to each other - can be detected in a sensitive and robust manner. As the cross-section of the first and second conductor can be reduced, particularly to half of the cross-section, an increase of weight due to the second conductor does not exist or is not significant. The first and second conductors enable a symmetric transmission mode of a communication signal on the first and second communication device. Transmission of the communication signal over the first and second conductor leads to reduced emission with respect to EMC norms and higher immunity against crosstalk and external fields, thus it leads to improved communication performance and reliability compared to a transmission over a single conductor. Hence, a power transmission system which is based on a first and second conductor can enable an improved detection of wire faults and can also enable the advantage of an improved transmission of a communication signal at the same time.

Preferably, the first conductor and the second conductor have essentially identical properties, particularly essentially identical conducting materials, cross-sections, lengths, and electrical insulations. Hence, in normal condition, the current through the first conductor is practically equal to the current through the second conductor. In the analysis and control unit, a simple comparison of the current in the first conductor to the current in the second conductor is performed. When a quantity derived out of these two currents, like for example the difference between these two currents, a correlation between these currents or any other metric, exceeds a certain threshold, an operating state of the circuit breaker can be changed, for example a breaking device may be activated in order to interrupt transmission of electrical energy through the first and second conductor.

Alternatively, the first and second conductors have different properties. For example, the first conductor has a larger diameter than the second conductor. The first conductor is installed in a normal cable duct, whereas the second conductor is installed in a safety cable duct. The first and second conductors are arranged such that in normal operation a large quantity of electrical power is transmitted through the first conductor and a small quantity through the second conductor. Accordingly, the cable duct for the first conductor can be designed to provide sufficient space, whereas the safety cable duct for the second conductor can be designed to provide a high reliability. Hence, in normal operation, the currents in the first and second conductor are in a fixed proportion. As soon as the a quantity derived out of the currents in the first and second conductor, like the proportion between these currents or any other metric, changes, an operating state of the circuit breaker can be changed and/or a fault stage can be indicated.

In a preferred embodiment, the first conductor is connected to a first distributor and the second conductor is connected to a second distributor, wherein further first and second conductors are connected between the first and second distributor and further electrical appliances. This has the advantage that the power distribution system may be divided into different sections, whereby in a section electrical appliances are connected to electrical power by a simple and flexibly changeable connection to the first and the second distributor.

In another preferred embodiment, the first and the second current sensor is galvanicaly insulated from the first and second conductor, for example by using Hall Effect sensors and/or Giant Magneto Resistance sensors and/or inductive sensors. A galvanic isolation has the advantage of a fail-safe circuit. Hall Effect sensors and/or Giant Magneto Resistance sensors have the advantage that both AC and DC currents can be sensed, wherein an inductive sensor typically is only capable to sense AC currents

Alternatively, the first and second current sensor is not galvanicaly insulated from the first and second conductor. However, particularly in case of a failure, the voltages and/or currents in the conductors may increase to high values and destroy a current sensor.

Preferably, the circuit breaker comprises a solid state switch and/or an electromechanical switch, which, according to an operating state of the circuit breaker, is capable to switch on or off the connection between the electrical power source and the first as well as the second conductor. A solid state switch may be used in order to achieve a higher resilience to environmental effects (mechanical shocks) and improved reliability and durability of the circuit breaker. An electromechanical switch may be used to switch higher currents and to avoid leakage currents inherent to solid state switches due their finite resistance, which may be unacceptable due to safety reasons.

Preferably, at least one voltage sensor is arranged in order to sense a voltage in the electrical power transmission system, particularly a voltage on the first and/or the second conductor, wherein the analysis and control unit is adapted to analyze the voltage and to control an operating state of the circuit breaker and/or to indicate a fault state based on the analysis of the voltage. A quantity derived from the sensed voltage and/or the sensed first and second current, like, for example, a comparison to a threshold, a correlation or any other metric, may be determined in order to change an operating state of the circuit breaker and/or to indicate a fault state.

Preferably, the first communication device is arranged to couple in/out from opposite directions the currents pertaining to the communication signal into/out from the first and second conductor or the further conductors and the second communication device is arranged to couple in/out from opposite directions the currents pertaining to the communication signal out from/into the first and second conductor or the further conductors. The currents pertaining to the communication signal are induced in the first and the second conductor in opposite directions. In case of an inductive coupling, and as AC or DC currents for power delivery are common mode, their magnetic fields ideally cancel inside the core of the transformer as the windings corresponding to the two wires of the balanced line are in opposite direction. So ideally there will be no core biasing. Thus smaller core sizes may be used without risk of core saturation.

Capacitive and/or inductive coupling of the communication signal into/out from the first and second conductor may be used. In case of a capacitive coupling, one or more capacitors may be used. In case of inductive coupling, a transformer with a primary winding and a first and a second secondary winding may be used.

In a preferred embodiment, a plurality of communication devices is arranged within the electrical power transmission system, wherein each communication device is arranged to send and/or receive a communication signal through the electrical power transmission system to one or more of the other communication devices. Hence, a PLC system (PLC: power line communication) is provided, wherein the communication devices may also be regarded as PLC communication devices. Each PLC communication device is able to communicate with one or more of the other PLC communication devices. The PLC communication devices may be used for controlling various equipment in a vehicle. For example, a central controller may be installed in order to control light, ventilation, an entertainment system, a passenger information system, or any other equipment in an aircraft.

Preferably, at least one communication device comprises a transformer for inductively coupling a communication signal into and/or out from the electrical power transmission system. A transformer may comprise a magnetic core, a primary winding, and a first and a second secondary winding. With respect to capacitive coupling, inductive coupling using a transformer has the advantage that typically fewer components are needed and that blocking of communication signals can be performed more effectively.

In a method for transmitting electrical power in an electrical power transmission system of a vehicle, electrical power is transmitted from an electrical power source through a circuit breaker and through a first conductor to the electrical appliance. An electrical return current is conducted by the chassis of the vehicle between the electrical appliance and the electrical power source. The electrical power is transmitted additionally by a second conductor from the circuit breaker to the electrical appliance, whereby a first current in the first conductor and a second current in the second conductor is sensed. The first and second current is analyzed in order to control an operating state of the circuit breaker and/or to indicate a fault state. Particularly, when the difference between the first and second current, a proportion between these currents and/or a transient behaviour of the currents meet certain criteria, an operating state of the circuit breaker may be controlled and/or a fault state is indicated such that a breaking device interrupts transmission of electrical power between the electrical power source and the electrical appliance.

In said method, additionally a communication signal is transmitted over the electrical power transmission system, the communication signal is coupled into or out from the first and second conductor with a first communication device at a first coupling point and coupled out from or into the first and the second conductor with a second communication device at a second coupling point. This method has the advantage that the need for a second conductor and therefore higher complexity can be better justified with the additional functionality to serve as a communication network.

Preferably, the currents of the communication signal are coupled into respectively out from the first and second conductor in opposite directions. Coupling may be performed using a transformer. As AC or DC currents for power delivery are common mode, their magnetic fields ideally cancel inside the core of the transformer as the windings corresponding to the two wires of the balanced line are in opposite direction. So ideally there will be no core biasing. Thus smaller core sizes may be used without risk of core saturation.

In a preferred method, the communication signal is transmitted through the electrical power transmission system between a plurality of communication devices arranged within the electrical power transmission system, wherein each communication device is arranged to send and/or receive the communication signal to one or more of the other communication devices. Hence, PLC communication is enabled, wherein power transmission to a plurality of devices and communication between these devices is provided at the same time.

A power distribution box for an electrical power transmission system has one or more circuit breakers with PLC functionality, each connected to a power input and adapted to split electrical input power onto one or more first and second outputs of the power distribution box and adapted to transmit and/or receive a communication signal onto and/or from the one or more first and second outputs of the power distribution box. The power distribution box has a data transmission system, particularly comprising a data concentrator, a PLC modem, and a PLC signal distributor, which is connected to the one or more circuit breakers with PLC functionality in order to transmit a communication signal between the one or more circuit breakers with PLC functionality and a data interface. Such a power distribution box has the advantage that electrical appliances can be supplied with electrical power and at the same time data communication between the electrical appliances and further equipment is enabled.

An electrical appliance with PLC functionality for an electrical power transmission system is arranged to combine electrical power received at a first and a second input and to transmit the combined electrical power to a specific application sub-system, which is connectable to or comprises an electrical appliance. The electrical appliance with PLC functionality is further arranged to transmit, particularly through a coupler, a communications signal between the first and second input and the specific application sub-system as well as preferably the electrical appliance. Such an electrical appliance with PLC functionality has the advantage that electrical power can be supplied to a specific application sub-system and at the same time a communication signal can be transmitted to the specific application sub-system.

Preferably, a first and a second current sensor are arranged in order to sense a current received at the first and the second input, wherein a control unit of the electrical appliance with PLC functionality is adapted to analyze the sensed currents and to turn off the specific application sub-system and/or to indicate a fault state based on the analysis. Hence, a wire fault may also be detected on the side of the appliance and procedures may be initiated accordingly. Furthermore, one or more voltage sensors may be arranged and the control unit may be arranged to analyze such voltages as well in order to turn off the specific application sub-system and/or to indicate a fault state.

Other advantageous embodiments and combinations of features come out from the detailed description below and the totality of the claims.

**Brief description of the drawings**

The drawings used to explain the embodiments show:

Fig. 1      an example of an electrical power transmission system;

Fig. 2      another example of an electrical power transmission system ;

Fig. 3      a first case of a wire fault;

Fig. 4      a second case of a wire fault;

Fig.5       a preferred embodiment of an electrical power transmission system arranged to also transmit a communication signal;

Fig. 6      an implementation of a current sensor;

Fig. 7        current sensors together with an initial communication device;

Fig. 8        a power distribution box according to the invention;

Fig. 9        a detailed view of a circuit breaker according to the invention; and

Fig. 10       an electrical appliance according to the invention.

In the figures, the same components are given the same reference symbols.

**Preferred embodiments**

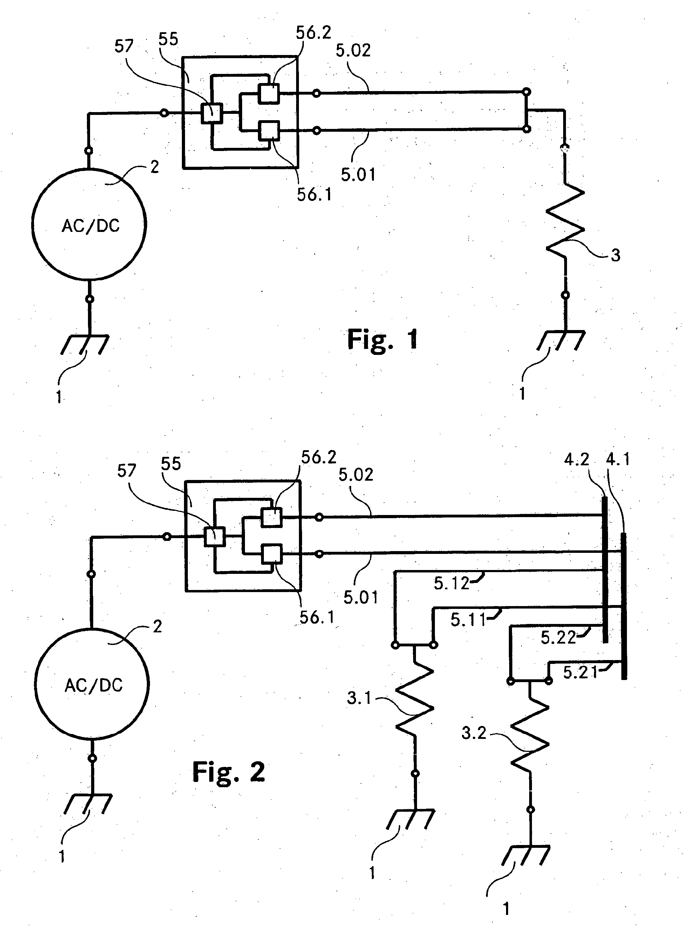

Fig. 1 shows a power transmission system, which may be arranged in a vehicle like a car, an aircraft, a vessel, a spacecraft or any other vehicle. One end of an electrical power source 2 is connected to the chassis 1 of the vehicle. The other side of the electrical power source 2 is connected to an input of a circuit breaker 55. The circuit breaker 55 has two outputs, which are connected to a first and a second conductor 5.01, 5.02. The first and the second conductor 5.01, 5.02 are insulated from each other and arranged essentially in parallel. The first and second conductor 5.01, 5.02 are further connected to an electrical appliance 3, like for example to a lighting, a heater, a ventilator, an air conditioning system, a display, an electrical motor, a multimedia system or any other electrical appliance. The electrical appliance is further connected to the chassis 1 of the vehicle. Hence, electrical current can be transmitted from the electrical power source 2 through the circuit breaker 55 over the first and second conductor 5.01, 5.02, to the electrical appliance 3 and from the electrical appliance 3 through the chassis 1 of the vehicle back to the electrical power source 2.
A power transmission system with a first and a second conductor 5.01, 5.02 may also be called "bifilar system" in the following.
The first and the second conductor 5.01, 5.02 may have essentially identical cross sections and lengths, and therefore essentially identical resistances.
The DC resistance of a copper wire with electrical resistivity or specific electrical resistance p , length l and diameter d is:

$$R_{DC} = \frac{\rho \cdot l \cdot 4}{d^2 \pi}$$

Example: A copper wire (resistivity or specific electrical resistance: $\rho$=1.72·10$^{-8}$ $\Omega$m) with a diameter of 1 mm (typical for low power distribution) and a length of 10 m has DC resistance $R_{DC}$ = 220 m$\Omega$.
In normal conditions (wiring is intact), total contact resistance of terminal connections is typically in the order of Milliohms or less, depending on the terminal size and the number of terminals along the wire path. Thus the currents in the first and the second conductor 5.01, 5.02 in a bifilar system will be well balanced (within a few percent)
In faulty conditions (e.g. loose terminal connection), contact resistance of a loose terminal connection may be in the order of several tens or hundreds of Milliohms and strongly variable. It will cause noticeable current imbalance in a bifilar system.
Thus, determining a quantity depending on the currents in the first and the second conductor, like measuring a current imbalance, a correlation between the currents or any other metric, is a suitable and reliable method to detect wire faults.
The electrical power source 2 is for example a battery in a car, a generator in an airplane, a power distribution box or any other electrical power source. The power source 2 may be a DC (DC: direct current) or an AC (AC: alternate current) source. Typical voltages of the power source 2 may be in a range of 12 V to 400 V. In case of an AC power source, typical frequencies may be in the range of 50 Hz to 800 Hz. In aircraft, many systems use 115 V AC at 400 Hz or 28 V DC power sources. In cars, 12 V DC power sources are widely used. However, using any other AC or DC power source with different voltages and/or frequencies is possible as well.
The chassis 1 of the vehicle is constructed out of an electrical conductive material like for example steel, aluminium, iron or any other electrical conductive material. Because of its size and construction, the chassis 1 of the vehicle forms an excellent conductor for electrical current.
A first and a second current sensor 56.1, 56.2 are provided, which may be arranged as shown in Fig. 1 in or close to the circuit breaker 55 or anywhere else. The use of a simple series resistor is the classical current sensing method, but requires a very small resistance in order to prevent excessive voltage drop. Additional amplification required may typically involve some inaccuracy due to DC offset and temperature drift. The major disadvantage of this method is, however, that there is no galvanic isolation between the current sensor and the conductor, which is essential for a fail-safe circuit.

The current sensor 56.1, 56.2 may be based on electro-mechanical principles (thermal and/or magnetic), such as used in conventional circuit breakers. This old and well-tried principle may suffice to trip a circuit breaker to protect the line from overloading, but they may not be suitable to predict wire faults and in particular arc faults.

An alternative current sensing method providing galvanic isolation and providing to sense AC and DC currents makes use of the Hall Effect or the Giant Magneto-Resistance Effect (GMR). Both Hall Effect and GMR Effect sensors are magnetic field sensors. Because any current-carrying wire or PCB trace (PCB: Printed Circuit Board) produces a magnetic field, magnetic sensors are useful for sensing current. They also provide galvanic isolation because they make no contact with the current-carrying conductor. To achieve good accuracy, therefore, Hall Effect and GMR Effect sensors generally require calibration and special precautionary measures to reduce their susceptibility to magnetic interference from adjacent circuitry.

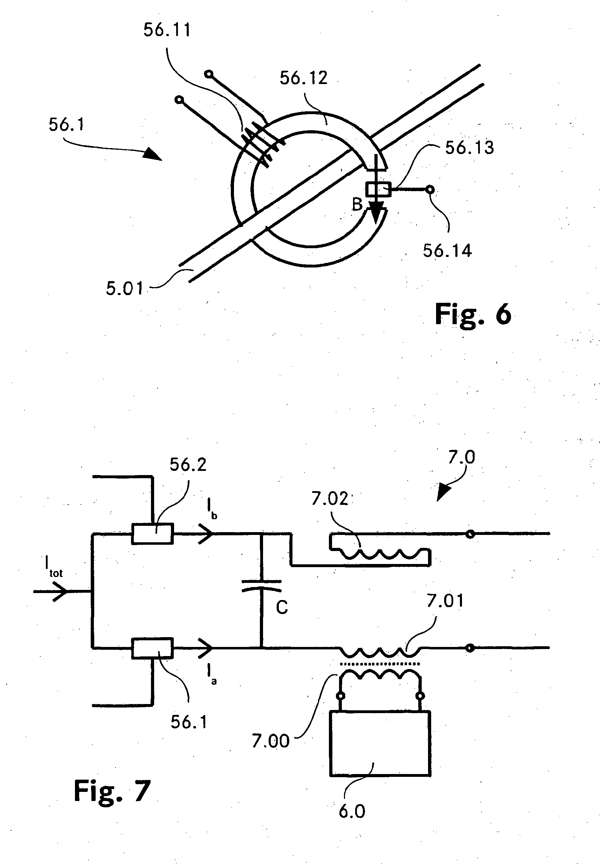

A basic concept of an AC & DC current sensor using a ferromagnetic core 56.12 is depicted in Fig. 6.. A coil is 56.11 is wound around the ferromagnetic core 56.12. This coil can be used in order to provide an AC sensing output or to provide field compensation described later. In a gap of the ferromagnetic core 56.12, a GMR Effect or a Hall Effect sensor 56.13 is arranged, which has a DC & AC sense out 56.14. The conductor 5.01 passes through the ferromagnetic core 56.12, as shown in Fig. 6. Since Hall Effect and GMR effect may be temperature dependent and non-linear, a closed-loop field compensation method is applied rather than a direct (open-loop) sensing. In stable closed loop conditions, the magnetic field through the sensor cancels and the sensed current equates the compensation current times a factor. Micro-sensors for PCB mounting are normally coreless but may be more susceptible to extraneous fields.

As shown in Fig. 1, an output of the first and second current sensor 56.1, 56.2 is connected to an analysis and control unit 57, which may be arranged in the circuit breaker 55 or anywhere else. The analysis and control unit 57 is arranged to analyze the first and second current sensed by the first and second current sensor 56.1, 56.2. According to the analysis, an operating state of the circuit breaker 55 is controlled. Particularly, when the first and second currents indicate a loose or broken conductor or an arc fault, the circuit breaker is tripped according to a corresponding policy and procedure. During such procedures, a breaking device (not shown in Fig. 1), which is arranged in the circuit breaker, may interrupt power transmission from the power source 2 to the electrical appliance 3.

Fig. 2 shows a power transmission system incorporating one or more pairs of first and second distributors 4.1, 4.2. The first conductor 5.01 is connected to the first distributor 4.1, whereas the second conductor 5.02 is connected to the second distributor 4.2. A first and second further conductor 5.11, 5.12 is connected to the first and second distributors 4.1, 4.2, in order to transmit electrical power to the electrical appliance 3.1. Another first and second further conductor 5.21, 5.22 is connected to the first and second distributor 4.1, 4.2, in order to transmit electrical power to the electrical appliance 3.2. In this manner, a plurality of electrical appliances 3.1, 3.2 may be connected to the first and second distributor 4.1, 4.2, in order to supply the electrical appliances 3.1, 3.2 with electrical power. Usage of the first and second distributor 4.1, 4.2 allows for more flexibility when installing the power transmission system in a vehicle like an aircraft or any other vehicle. By means of the first and second conductor 5.01, 5.02, electrical power is transmitted to the first and second distributor 4.1, 4.2, in order to supply a certain region in an aircraft, like, for example, a group of seats, with electrical power. Hence, the electrical appliances of each seat, for example, are connected to the first and second distributor 4.1, 4.2.

The power transmission system comprises a power transmission network which contains the first and second conductor 5.01, 5.02 and the first and second further conductors 5.11, 5.12, 5.21, 5.22.

Usually, the first and second conductor 5.01, 5.02 are called to be within the trunk section of the power transmission network, whereas the first and second further conductors 5.11, 5.12 are called to be within the branch section of the power transmission network.

Impact of a trunk fault is generally more severe than impact of a branch fault, also likely requiring different policies and procedures for wire fault handling. Therefore, wire fault detection should be able to roughly localize a wire fault, e.g. trunk side or branch side, and identify the appliances affected.

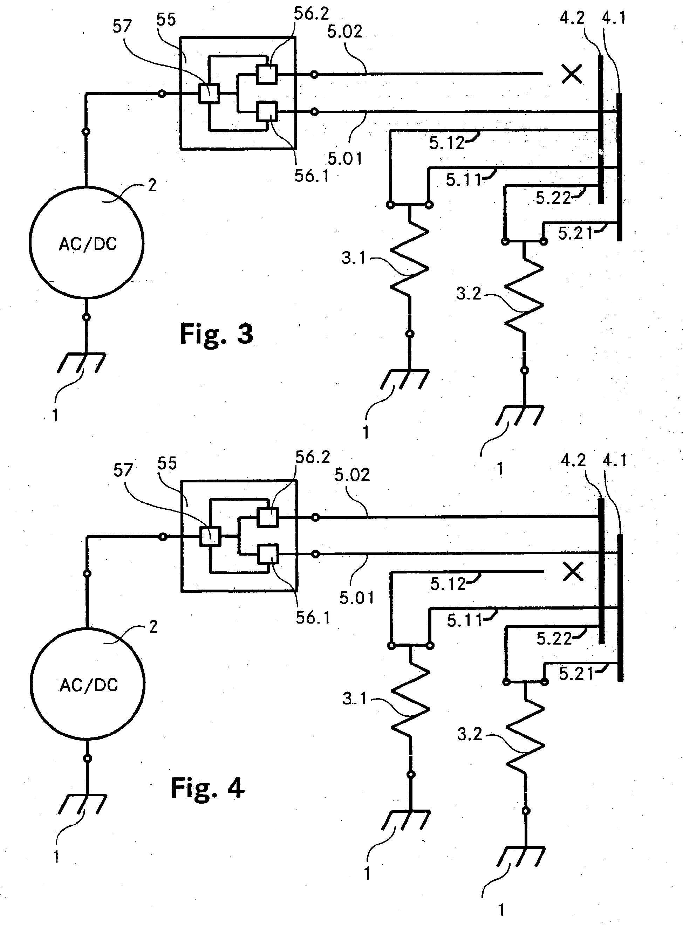

Fig. 3 shows a first case of wire fault, namely a broken wire or a bad contact in the second conductor 5.02 of the trunk section of the power transmission network. Depending on the loading, such a wire fault may result in a current of up to 200% of the conductors rated current.

Fig. 4 shows a second case of wire fault, namely a broken wire or a bad contact in a second further conductor 5.12 of the branch section of the power transmission system. Such a fault will only affect appliances fed by this network branch, which typically are a few. Depending on the loading, a current exceeding the rated current may result, particularly if there is an appliance or group of appliances that are dominant power consumers.

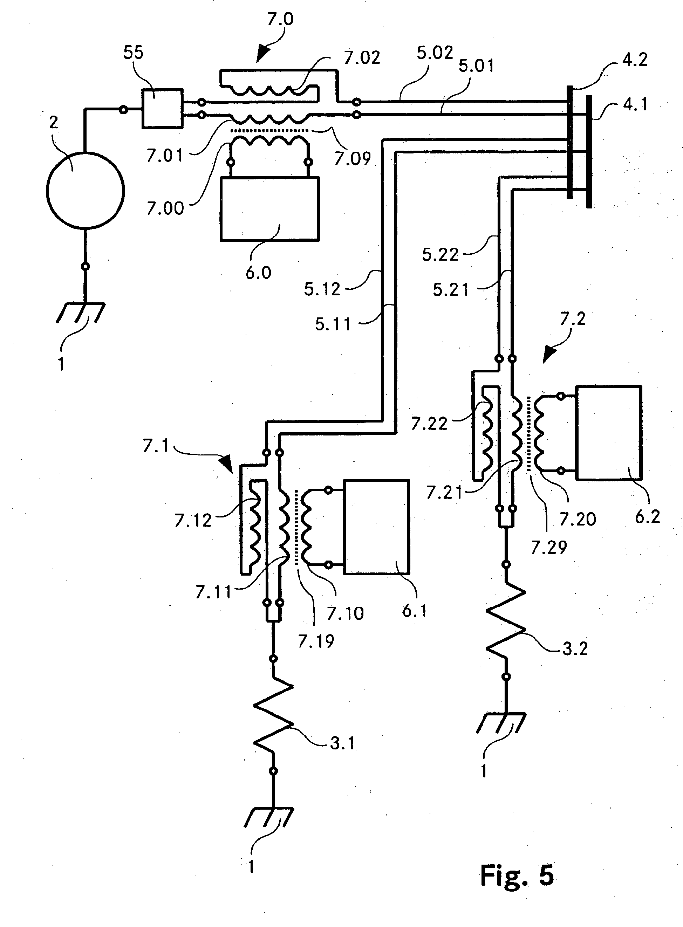

Fig. 5 shows a preferred embodiment of the power transmission system according to the invention also arranged to transmit a communication signal over the power transmission system. In the currently pending European patent application No. 09 405 178.6 (not yet published at the date of filing the present application), a similar power transmission system is disclosed, however without disclosing a circuit breaker 55.

According to Fig. 5, the power transmission system comprises a circuit breaker 55, an electrical power source 2 as described above, a first and a second distributor 4.1, 4.2, a a first and a second conductor 5.01, 5.02, and first and second further conductors 5.11, 5.12, 5.21, 5.22. An input of the circuit breaker 55 is connected to the electrical power source 2. One end of the first and one end of the second conductor 5.01, 5.02 is connected via the transformer windings of an initial transformer 7.0 of an initial communication device 6.0 to a first and second output of the circuit breaker 55. The other end of the first and the second conductor 5.01, 5.02 is connected to the first and the second distributor 4.1, 4.2.

As shown in Fig. 5, one end of a first and one end of a second further conductor 5.11, 5.12 is connected via the transformer windings of a first transformer 7.1 of a first communication device 6.1 to a first electrical appliance 3.1. The other end of the first and the second conductor 5.11, 5.12 is connected to the first respectively the second distributor 4.1, 4.2. A second electrical appliance 3.2 is connected accordingly via a second transformer 7.2 of a second communication device 6.2 to the first and the second distributor 4.1, 4.2. Accordingly, further electrical appliances may be connected to the first and second distributor (not shown).

Each of the transformers 7.0, 7.1, 7.2 has one primary winding 7.00, 7.10, 7.20, a first and a second secondary winding 7.01, 7.02, 7.11, 7.12, 7.21, 7.22, and a magnetic core 7.09, 7.19, 7.29. One end of the first and the second secondary winding 7.01, 7.02, 7.11, 7.12, 7.21, 7.22 is connected to the electrical power source 2 respectively to the electrical appliances 3.1, 3.2. The other end of the first respectively the second secondary winding 7.01, 7.02, 7.11, 7.12, 7.21, 7.22 is connected to the first respectively the second conductor 5.01, 5.02, 5.11, 5.12, 5.21, 5.22 of the power transmission network. The first and the second secondary winding 7.01, 7.02, 7.11, 7.12, 7.21, 7.22 are connected antiparallel, such that a primary current in the primary winding 7.00, 7.10, 7.20 is inducing a first secondary current in the first secondary winding 7.01, 70.11, 7.21 in one direction and a second secondary current in the second secondary winding 7.02, 7.12, 7.22 in an opposite direction, such that the first and the second secondary current, which pertain to the communication signal to be transmitted over the power transmission network, flow in opposite directions through the first and the second conductors 5.01, 5.11, 5.21.

Hence, an alternative approach to vehicular or aeronautical onboard power transmission and concurrent signal transmission over the same power transmission system is proposed that replaces the single wire by a double wire, providing a robust wire fault detection together with a homogenous and well defined symmetric transmission line for data and higher cross-talk attenuation in wire bundles, but maintaining the asymmetric or common mode for the distribution of power. Inventors believe that this solution improves reliability and performance of a power transmission system used as well for signal transmission dramatically and is also the key to achieve compliance with existing EMC norms. It will be shown in the following that these benefits may outweigh the drawbacks of a double wire cabling that may add some complexity and may involve use of twisted pair and development of special sliceable cables and novel terminals and wire fixations.

Fig. 6 shows, as described above when discussing Fig. 1, an implementation of a current sensor 56.1 with galvanic isolation between the current sensor 56.1 and the conductor 5.01.

Fig. 7 shows current sensors 56.1, 56.2 together with an initial transformer 7.0 of an initial communication device 6.0. A current $I_{tot}$ originating from the circuit breaker and the electric power source (not shown) is split into the first and second current $I_a$, $I_b$, which have an equal value if the first and second conductor (not shown) are stably connected without wire faults to the distributors (not shown) and electrical appliances (not shown). In order to provide a short circuit for the communication signal and to prevent currents from the communication signals from passing through current sensors, a capacitor C may be arranged as shown in Fig. 7 between the conductors carrying the first and the second current $I_a$, $I_b$. A current in the primary winding 7.00 of the initial transformer 7.0 is inducing a first secondary current in the first secondary winding 7.01 in one direction and a second secondary current in the second secondary winding 7.02 in an opposite direction, such that the first and the second secondary current, which pertain to the communication signal to be transmitted over the power transmission network, flow in opposite directions through the first and the second conductors (not shown). In this manner, a PLC link is established between the communication device 6.0 and the first and second conductor (not shown), in order to transmit a communication signal onto the first and second conductor.

In order to sense the first and second current $I_a$, $I_b$, a first and a second current sensor 56.1, 56.2 is arranged, wherein the first and second current sensor 56.1, 56.2 is preferably constructed in a manner shown in Fig. 6.

However, as an alternative approach, the first and second current $I_a$, $I_b$ may be detected without any additional first and second current sensor 56.1, 56.2 at all. A change in PLC link characteristics, e.g. receive level or SNR (SNR: Signal to Noise Ratio), may indicate saturation of the Ferrite core of the power line coupler/transformer. In the event of core saturation, the uplink receive level at PLC Head End from all or individual PLC terminals may drop by 20 dB or more. The SNR may degrade even more as the result of additional signal distortion caused by the saturated core.

This method requires frequent polling of all terminal units when there is no traffic anyway. The poll cycle must be short enough to timely trip the circuit breaker.

Physical Layer (PHY) diagnostics functions may already exist as part of a PLC modem's firmware/software. Therefore, this method is a software solution, which monitors the received signal level and/or SNR. In case of signal degrading below a defined threshold, the software signals a detection event to an instance. Depending on the defined policy this instance may then trip the circuit breaker.

This method of detection however cannot be considered reliable and applicable because of the following reasons:

- the method requires calibration, which means storing measured receive levels/SNR in a memory from time to time, since the network configuration and/or the number of appliances connected may be subject to alterations in some cases. This may cause changes in receive levels and quality as well. A wire fault occurring prior to such calibration may therefore never be detected as it would be assumed to be the normal state;

- a wire fault may not always lead to complete core saturation. In case of low power consumption (low supply current), the link performance may change marginally so that it could not be unambiguously attributed to a wire fault. The problem of a 'high frequency leaking' wire line would remain undetected and will not be signalled to the A/C fault management system;

- the method cannot be accurate enough to trip a circuit breaker. This is particularly true if core saturation did occur at relatively low current ratings, which will be likely in an optimized design. A circuit breaker should be tripped only when the single wire current is exceeding its ratings;

- arc faults cannot be detected.

Therefore, sensing the current in each wire of the bifilar system is considered to be the proper and adequate method in order to provide the required accuracy and reliability.

A wire fault according to Fig. 3, namely a broken wire or a bad contact in the second conductor 5.02 of the trunk section of the power transmission system, will likely cause saturation of the head-end-sided power line coupler, i.e. the PLC modem arranged in the proximity to the electrical power source 2, and may also cause saturation of some load-sided power line couplers, i.e. the PLC modem arranged in proximity to the electrical appliances 3.1, 3.2.

A wire fault according to Fig. 4, namely a broken wire or a bad contact in a second further conductor 5.12, 5.22 of the branch section of the power transmission system, may cause saturation of those load-sided power line couplers that are connected to this faulty branch and may cause head-end-sided coupler saturation, particularly if the same type of coupler with equal current ratings is used in the head end.

As a baseline, wire fault detection according to the invention is able to identify the following events of fault:

1. AC/DC differential current (current imbalance) exceeding a defined threshold indicating a wire fault that may lead to excessive radiation (egress) or loss of immunity (ingress),

2. Rated AC/DC differential current (current imbalance) of power line coupler exceeded, and

3. Rated AC/DC current of single wire exceeded.

Assuming a weight-optimized bifilar wiring using minimum required wire gauge, overloading of a single wire due to a wire fault trip the corresponding circuit breaker. Preferably, trip time follows the average characteristics of a conventional A/C circuit breaker. In case current on single wire exceeded 200% of rated current, the circuit breaker is tripped within a period corresponding to the average of a conventional circuit breaker, which may be 10 seconds.

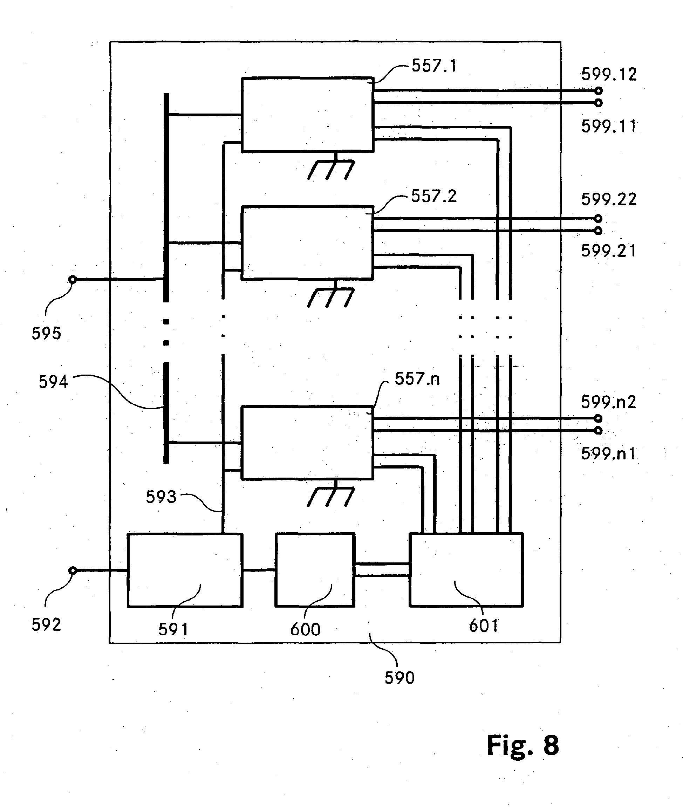

Fig. 8 shows a high level architecture of a secondary power distribution box (SPDB) with integrated bifilar PLC, which may be called power distribution box with PLC functionality. The concept of implementation uses current sensors in each wire and an integrated approach in which PLC Head End and PLC Terminals are integrated into the power distribution box and into the appliances. This provides for a one-to-one (100% congruent) power and data network topology, the use of synergies like power for PLC modem derived from power supply of the appliance and data interfaces, and the minimization of extra boxes and connectors for communications at the head-end-side and appliance-side in order to minimize weight and complexity. Advanced power distribution units presently used will likely incorporate communications functions for remote control and monitoring/diagnostic purposes, requiring a data interface anyway.

According to Fig. 8 the power distribution box 590, which may be a so called secondary power distribution box, comprises a data concentrator 591 with a data interface 592, e.g. an Ethernet interface. The PLC modem 600 and the PLC signal distributor 601 correspond to the initial communication device 6.0 already mentioned above. The SPDB 590 comprises further several circuit breakers with PLC functionality 557.1, 557.2, ..., 557.n, which will described in more detail below and basically comprise a circuit breaker 55 and a transformer 7.0 as described above. The inputs of the circuit breakers with PLC functionality are connected to the busbar 594 which is further connected through power input 595 to a power source, e.g. a 115 VAC/400 Hz or 28 VDC power source. The data concentrator 591 is connected through control line 593 to control circuitries of the circuit breakers with PLC functionality 557.1, 557.2, ..., 557.n. Finally, each of the circuit breakers with PLC functionality 557.1, 557.2, ..., 557.n is connected to first and a second outputs of the power distribution box 599.11, 599.12, 599.21, 599.22, ... 599.n 1, 599.n2, which are designed to be connected to first and second conductors (not shown) to conduct electrical power to electrical appliances and as well as to transmit communication signals.

In the high level architecture of a secondary power distribution box (SPDB) 590, which is typically used in an aircraft, the signal of the PLC head-end modem is distributed to each circuit breaker with PLC functionality 557.1, 557.2, ..., 557.n, as well as to the first and second conductors connected to these circuit breakers with PLC functionality 557.1, 557.2, ..., 557.n. The PLC signal distributor 601 may also include circuitry for transient protection.

Hence, the SPDB 590 provides for both power supply and communications signal transmission in an electrical power transmission system.

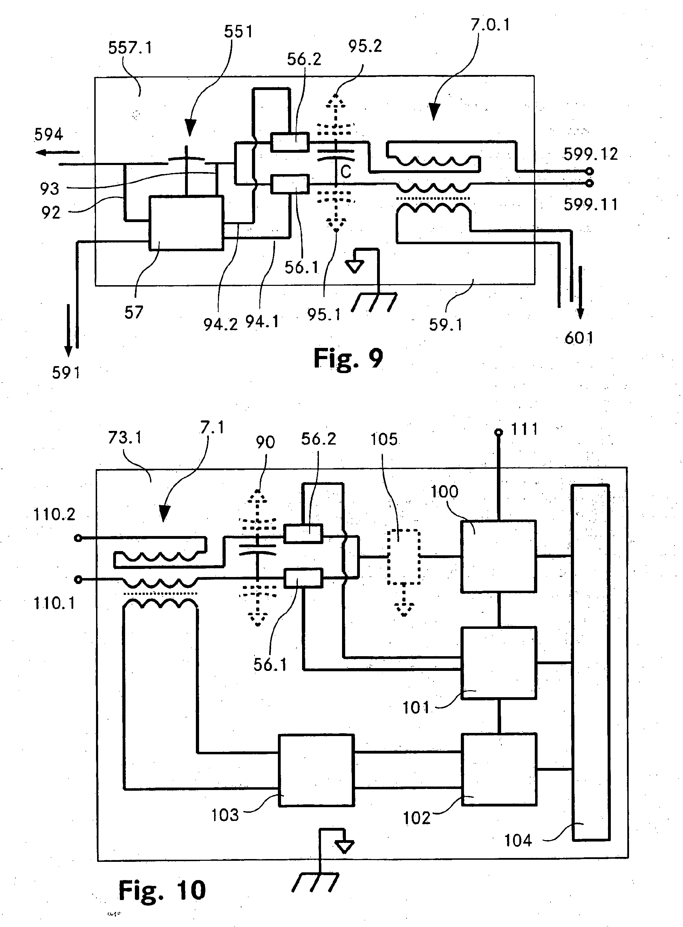

Fig. 9 provides a more detailed view of a circuit breaker with PLC functionality 557.1 showing the first and second current sensor 56.1, 56.2 and the integrated power line coupler or transformer 7.0. Additionally, a supply voltage sensor 92 and a line voltage sensor 93 may be arranged in order to detect the corresponding voltages, their transients and waveforms.

As indicated in Fig. 9, the input of the circuit breaker with PLC functionality 557.1 is adapted to be connected to busbar 594, which is further connected to a power source, e.g. a 115 VAC/400 Hz or 28 VDC power source (not shown). The input of the circuit breaker with PLC functionality 557.1 is connected to the breaking device 551 and then split into two different lines, which are connected through transformer 7.0 to the output of the power distribution box 599.11, 599.12. As shown in Fig. 9, the primary winding of transformer 7.0 is connected to the PLC signal distributor 601. Between the split lines, a capacitor C may be arranged, in order to provide a short circuit for the communication signal and to prevent currents from the communication signals from passing through current sensors, hence, to provide a proper low impedance line termination for inductive coupling. Further capacitors 95.1, 95.2 may be connected to ground to block common mode. The currents in the split lines are sensed as described with the current sensors 56.1, 56.2, which are connected to an analysis and control unit 57, which is also called trip control unit. The analysis and control unit 57 may comprise a programmable microprocessor.

The breaking device 551, which actually breaks the circuit when tripped by the analysis and control unit 57, may be a solid state or classical electro-mechanical switch. The circuit breaker 557.1 is connected to data concentrator 591, in order to provide a data interface for remote control, monitoring and diagnostics.

Fig. 10 represents the architecture of a corresponding electrical appliance with PLC functionality 73.1 integrating bifilar PLC. The electrical appliance with PLC functionality 73.1 is basically a combination of the transformer 7.1 and the electrical appliance 3.1 according to Fig. 5. A first and a second current sensor 56.1, 56.2 are provided to monitor current on each wire separately. In the event of excessive current imbalance, a control unit 101 will act according to policies and procedures specifically defined for this appliance.

Electrical power and communications signals are transmitted through further conductors 5.11, 5.12 (not shown) to the first and second input 110.1, 110.2 of the electrical appliance with PLC functionality 73.1. The currents of the communications signal is coupled in either direction into or out from the corresponding wires of the first and second input 110.1, 110.2. Electrical power is transmitted from the first and second input 110.1, 110.2 to a single wire, which is connected to the power supply 100, possibly through an optional HF block filter (HF: High Frequency). Preferably, an emergency supply 111 is connected to the power supply as well, e.g. a 28 VDC power supply. The power supply 100 is used to feed electrical energy to a specific application sub-system 104, which is attached to or comprises an electrical appliance.

The primary winding of transformer 7.1 is connected to a PLC modem 102, which is further connected to the specific application sub-system 104 in order to transmit or receive a communication signal. A transient protector 103 may be arranged between the PLC modem 102 and the primary winding of transformer 7.1.

The control unit 101, which monitors the currents, is also connected to the specific application sub-system 104, such that in case of a change of a quantity derived from the currents, like for example a current imbalance, a correlation or any other metric, appropriate procedures may be initiated on the specific application sub-system 104. Such a procedure may comprise preparing the specific application sub-system 104 for possible power off.

In the following some fault events are listed and to each a policy dependant procedure is proposed:

| Fault event | Proposed policy and procedure |
|---|---|
| Power distribution box: fault event #1 current exceeding rated single wire current | • Circuit breaker is tripped<br>• Fault message is sent to fault management system |

(continued)

| Fault event | Proposed policy and procedure |
|---|---|
| Power distribution box: fault event #2 current imbalance exceeding rated current of power line coupler but current not exceeding rated single wire current | • Circuit breaker is not tripped<br><br>• Fault message is sent to fault management system<br><br>• Communication is maintained with those appliances still providing connectivity |
| Appliance: fault event #1 current exceeding rated single wire current (This event should normally trip circuit breaker) | If circuit breaker would not trip by some reasons<br>• Application sub-system is disconnected from normal power supply as a remedy against coupler saturation and if safety relevant, appliance is seamlessly switched to emergency/essential supply system<br><br>• Power supply and PLC modem stay on • Fault message is sent to fault management system via PLC |
| Appliance: fault event #2: current imbalance exceeding rated current of power line coupler but current not exceeding rated single wire current | • Application sub-system is disconnected from normal power supply as a remedy against coupler saturation and if safety relevant, appliance is seamlessly switched to emergency/essential supply system<br><br>• PLC modem stays on<br><br>• Fault message is sent to fault management system via PLC<br><br>• if not safety relevant, appliance is reenergized and if possible operated in an autonomous mode (w/o communication) from the ordinary supply system |

In summary, it is to be noted that a more robust and reliably detection of wire faults has been described, which works also when future, new types of electrical loads are connected to the power transmission system or when future, new types of wire faults occur.

This bifilar concept is adapted to:

• provide identification of wire faults in required time;

• provide the required accuracy and reliability;

• provide new functions and features to increase safety of aircraft harnesses thanks to the inherent redundancy.

The traditional approach within an aircraft for equipment requiring a data and power communication has been to use separate data and power transmission networks. Employing Power Line Communication (PLC) technology, the power transmission network can be used for both power and data in order to reduce aircraft weight and harness complexity. As power transmission networks are not designed for data communications they usually provide a very adverse medium for data transmission. However, existing PLC standards provide a robust transmission technology, which has been designed to cope with such conditions.

Nevertheless, PLC over single wires with common ground return path as typical in metallic aircraft cannot provide sufficient immunity against conducted and radiated noise/interference (ingress) and is also unfavourable in regards to unwanted emissions (egress). Moreover, significant cross-talk is expected in wire bundles. This has been confirmed by simulations and measurements.

It has been therefore proposed an alternative approach to PLC in aircraft that replaces the asymmetric single wire line by a symmetric double wire line providing a system with lower radiation, higher immunity and less cross-talk in wire bundles, but maintaining the asymmetric (common) mode with a common ground return path for the distribution of power.

This bifilar solution improves performance of a PLC-based data network dramatically and is also a key to achieve compliance with existing EMC norms (DO-160D). The benefits of the bifilar approach outweigh the drawbacks of introducing a second wire that does to some extent compromise mass and complexity reduction of a PLC solution and will call for new double wire aircraft installation concepts and solutions.

To maximize weight and volume savings of the bifilar system, it is desirable to:

- use half copper cross-section since each wire ideally carries only half of the total current

- use small core power line couplers/transformers with low saturation current, which is feasible as magnetic fields from AC/DC supply currents (common mode) ideally cancel each other inside the core.

In normal conditions (intact wiring), currents in a bifilar system will split into halves with only a very minor imbalance, since total wire path resistance will be largely dominated by the wire's resistances. Assuming a wire length in the order of meters or tens of meters, contact resistances in screwed or clamp terminal connections are much lower by several orders of magnitude.

Inherent to an optimized bifilar system is the fact that a single broken wire or an increased contact resistance e.g. due to a loose terminal connection will disturb current balance. This has the following secondary effects:

- increase of current flow through the yet intact connection. In an extreme case, single wire current may exceed up to a maximum of 200% of rated current

- saturation of power line coupler/transformer leading to degraded performance of the PLC system or complete loss of communication link in critical cases, and possibly to increased harmonics emissions due to non-linearity.

- conversion of a portion of the PLC symmetrically injected HF current into common mode (increased longitudinal conversion loss) leading to increased radiated emissions

A conventional circuit breaker that simply detects the sum current would not trip in such event. However, using a bifilar system it is possible to reliability detect wire faults leading to current differences.

In a bifilar system - thanks to its inherent redundancy - a broken wire or a loose terminal connection can be detected, which may not be detectable in a conventional monofilar power transmission system. It shall be noted that broken wires may lead to arcing at high altitude and loose connections or bad contacts may cause local overheating. Wiring faults therefore represent a potential risk for aircraft safety. The issue of aircraft wiring safety has received widespread attention in recent years, highlighted by the unfortunate TWA 800 and Swissair 111 tragedies.

The proposed electrical power transmission system is well adapted and easily employable in currently developed environments using more and more solid state technology like solid state switches and circuitries.

## Claims

1. Electrical power transmission system of a vehicle, for delivering electrical power from an electrical power source (2) to an electrical appliance (3), wherein a circuit breaker (55) is connected between the electrical power source (2) and a first conductor (5.01), which is further connected to the electrical appliance (3), wherein the electrical power source (2) and the electrical appliance (3) are connected to the chassis (1) of the vehicle, which acts as a conductor for conducting an electrical current between the electrical appliance (3) and the electrical power source (2), wherein:

   a) a second conductor (5.02) is connected between the circuit breaker (55) and the electrical appliance (3), wherein the first and the second conductor (5.01, 5.02) are electrically isolated and connected in parallel, wherein the first and second conductor (5.01, 5.02) are arranged to both transmit electrical power of the electrical power source (2),
   b) a first current sensor (56.1) is arranged to sense a first current in the first conductor (5.01) and a second current sensor (56.2) is arranged to sense a second current in the second conductor (5.02), and
   c) an analysis and control unit (57) is arranged, in order to analyze the first and the second current and to control an operating state of the circuit breaker (55) and/or to indicate a fault state based on the analysis of the first and the second current, **characterized in that**
   d) a first communication device (6.0, 6.1, 6.2) is arranged at a first coupling point in order to couple a communication signal into respectively out from the first and second conductor (5.01, 5.02) and/or the further first and second conductors (5.11, 5.21, 5.21, 5.22), and
   e) a second communication device (6.0, 6.1, 6.2) is arranged at a second coupling point in order to couple a communication signal into respectively out from the first and second conductor (5.01, 5.02) and/or the further first and second conductors (5.11, 5.21, 5.21, 5.22).

**2.** Electrical power transmission system according to claim 1, **characterised in that** the first conductor (5.1) and the second conductor (5.2) have essentially identical properties, particularly essentially identical conducting materials, cross-sections, lengths, and electrical insulations.

**3.** Electrical power transmission system according to claims 1 or 2, **characterised in that** the first conductor (5.01) is connected to a first distributor (4.1) and the second conductor (5.02) is connected to a second distributor (4.2), wherein further first and second conductors (5.11, 5.12, 5.21, 5.22) are connected between the first and second distributor (4.1, 4.2) and further electrical appliances (3.1, 3.2).

**4.** Electrical power transmission system according to one of claims 1 to 3, **characterized in that** the first and the second current sensor (56.1, 56.2) is galvanicaly Insulated from the first and second conductor (5.01, 5.02), for example by using Hall Effect sensors and/or Giant Magneto Resistance sensors.

**5.** Electrical power transmission system according to one of claims 1 to 4, **characterized in that** the circuit breaker (55) comprises a solid state switch and/or an electro-mechanical switch, which, according to an operating state of the circuit breaker (55), is capable to switch on or off the connection between the electrical power source (2) and the first as well as the second conductor (5.01, 5.02).

**6.** Electrical power transmission system according to one of claims 1 to 5, **characterized in that** at least one voltage sensor (92, 92) is arranged in order to sense a voltage in the electrical power transmission system, particularly a voltage on the first and/or the second conductor (5.01, 5.02), wherein the analysis and control unit (57) is adapted to analyze the voltage and to control an operating state of the circuit breaker (55) and/or to indicate a fault state based on the analysis of the voltage.

**7.** Electrical power transmission system according to claim 1 to 6, **characterized in that** the first communication device (6.0, 6.1, 6.2) is arranged to couple in/out from opposite directions the currents pertaining to the communication signal into/out from the first and second conductor or the further conductors (5.01, 5.02, 5.11, 5.12, 5.21, 5.22) and the second communication device (6.0, 6.1, 6.2) is arranged to couple in/out from opposite directions the currents pertaining to the communication signal out from/into the first and second conductor or the further conductors (5.01, 5.02, 5.11, 5.12, 5.21, 5.22).

**8.** Electrical power transmission system according to claim 1 or 7, **characterized in that** a plurality of communication devices (6.0, 6.1, 6.2) is arranged within the electrical power transmission system, wherein each communication device (6.0, 6.1, 6.2) is arranged to send and/or receive a communication signal through the electrical power transmission network to one or more of the other communication devices (6.0, 6.1, 6.2).

**9.** Electrical power transmission system according to one of claims 1 to 8, **characterized in that** at least one communication device (6.0, 6.1, 6.2) comprises a transformer (7.0, 7,1, 7.2) for inductively coupling a communication signal into and/or out from the electrical power transmission network.

**10.** Method for transmitting electrical power in an electrical power transmission system of a vehicle according to claim 1, wherein electrical power is transmitted from an electrical power source (2) through a circuit breaker (55) and through a first conductor (5.01) to the electrical appliance (3), whereby an electrical return current is conducted by the chassis (1) of the vehicle between the electrical appliance (3) and the electrical power source (2), wherein:

a) the electrical power is transmitted additionally by a second conductor (5.02) from the circuit breaker (55) to the electrical appliance (3), whereby a first current in the first conductor (5.01) and a second current in the second conductor (5.02) is sensed, and
b) the first and second current is analyzed in order to control an operating state of the circuit breaker (55) and/or to indicate a fault state,
whereby additionally a communication signal is transmitted over the electrical power transmission system, **characterized in that**
c) the communication signal is coupled into or out from the first and second conductor (5.01, 5.02) with a first communication device (6.0, 6.1, 6.2) at a first coupling point and coupled out from or into the first and the second conductor (5.01, 5.02) with a second communication device (6.0, 6.1, 6.2) at a second coupling point.

**11.** Method according to claim 10, **characterised in that** the currents pertaining to the communication signal are coupled into respectively out from the first and second conductor (5.01, 5.02) in opposite directions.

**12.** Method according to claim 10 or 11, **characterised in that** the communication signal is transmitted through the electrical power transmission system between a plurality of communication devices (6.0, 6.1, 6.2) arranged within the electrical power transmission network, wherein each communication device (6.0, 6.1, 6.2) is arranged to send and/or receive the communication signal to one or more of the other communication devices (6.0, 6.1, 6.2).

**13.** A system according to one of claims 1 to 9, comprising a power distribution box (590), wherein the power distribution box is comprising:

a) one or more circuit breakers with PLC functionality (557.1, 557.2, ... 557.n), each connected to a power input (595) and adapted to split electrical input power onto one or more first and second outputs of the power distribution box (599.11, 599.12, 599.21, 599.22, ... 599.n1, 599.n2) and adapted to transmit and/or receive a communication signal onto and/or from the one or more first and second outputs of the power distribution box (599.11, 599.12, 599.21, 599.22, ... 599.n1, 599.n2),

b) a data transmission system, particularly comprising a data concentrator (591), a PLC modem (600), and a PLC signal distributor (601), which is connected to the one or more circuit breakers with PLC functionality in order to transmit a communication signal between the particularly one or more one or more circuit breakers with PLC functionality (557.1, 557.2, ... 557.n) and a data interface 592.

**14.** A system according to one of claims 1 to 9 or 13, comprising an electrical appliance with PLC functionality (73.1), which is arranged to:

a) combine electrical power received at a first and a second input (110.1, 110.2) and to transmit the combined electrical power to a specific application sub-system (104), which is connectable to or comprises an electrical appliance (3.1), and

b) transmit, particularly through a transformer (7.1), a communications signal between the first and second input (110.1, 110.2) and the specific application sub-system (104) as well as preferably the electrical appliance (3.1).

**15.** A system according to claim 14, **characterized in that** in the electrical appliance with PLC functionality (73.1) a first and a second current sensor (56.1, 56.2) are arranged in order to sense a current received at the first and the second input (110.1, 110.2), wherein a control unit (101) is adapted to analyze the sensed currents and to turn off the specific application sub-system and/or to indicate a fault state based on the analysis.

**Patentansprüche**

**1.** Elektrisches Energieübertragungssystem eines Fahrzeugs zum Liefern von elektrischer Energie von einer elektrischen Energiequelle (2) zu einer elektrischen Einrichtung (3), wobei ein Trennschalter (55) zwischen der elektrischen Energiequelle (2) und einem ersten Leiter (5.01) geschaltet ist, der ferner mit der elektrischen Einrichtung (3) verbunden ist, wobei die elektrische Energiequelle (2) und die elektrische Einrichtung (3) mit dem Chassis (1) des Fahrzeugs verbunden sind, das als Leiter zum Leiten eines elektrischen Stroms zwischen der elektrischen Einrichtung (3) und der elektrischen Energiequelle (2) dient, wobei:

a) ein zweiter Leiter (5.02) zwischen dem Trennschalter (55) und der elektrischen Einrichtung (3) geschaltet ist, wobei der erste und der zweite Leiter (5.01, 5.02) elektrisch isoliert und parallelgeschaltet sind, wobei der erste und der zweite Leiter (5.01, 5.02) so angeordnet sind, dass sie beide elektrische Energie der elektrischen Energiequelle (2) übertragen,

b) ein erster Stromsensor (56.1) so angeordnet ist, dass er einen ersten Strom in dem ersten Leiter (5.01) erfasst, und ein zweiter Stromsensor (56.2) so angeordnet ist, dass er einen zweiten Strom in dem zweiten Leiter (5.02) erfasst, und

c) eine Analyse- und Steuereinheit (57) so angeordnet ist, dass sie den ersten und den zweiten Strom analysiert und einen Betriebszustand des Trennschalters (55) steuert und/oder einen Fehlerzustand auf der Basis der Analyse des ersten und des zweiten Stroms anzeigt, **dadurch gekennzeichnet, dass**

d) eine erste Kommunikationsvorrichtung (6.0, 6.1, 6.2) an einem ersten Koppelpunkt angeordnet ist, um ein Signal in den beziehungsweise aus dem ersten und zweiten Leiter (5.01, 5.02) und/oder die/den weiteren ersten und zweiten Leiter(n) (5.11, 5.12, 5.21, 5.22) zu koppeln, und

e) eine zweite Kommunikationsvorrichtung (6.0, 6.1, 6.2) an einem zweiten Koppelpunkt angeordnet ist, um ein Signal in den beziehungsweise aus dem ersten und zweiten Leiter (5.01, 5.02) und/oder die/den weiteren

EP 2 360 805 B1

ersten und zweiten Leiter(n) (5.11, 5.21, 5.21, 5.22) zu koppeln.

2. Elektrisches Energieübertragungssystem nach Anspruch 1, **dadurch gekennzeichnet, dass** der erste Leiter (5.1) und der zweite Leiter (5.2) im Wesentlichen identische Merkmale, insbesondere im Wesentlichen identische leitende Materialien, Querschnitte, Längen und elektrische Isolierungen, aufweisen.

3. Elektrisches Energieübertragungssystem nach Anspruch 1 oder 2, **dadurch gekennzeichnet, dass** der erste Leiter (5.01) mit einem ersten Verteiler (4.1) verbunden ist und der zweite Leiter (5.02) mit einem zweiten Verteiler (4.2) verbunden ist, wobei weitere erste und zweite Leiter (5.11, 5.12, 5.21, 5.22) zwischen dem ersten und dem zweiten Verteiler (4.1, 4.2) und weiteren elektrischen Einrichtungen (3.1, 3.2) geschaltet sind.

4. Elektrisches Energieübertragungssystem nach einem der Ansprüche 1 bis 3, **dadurch gekennzeichnet, dass** der erste und der zweite Stromsensor (56.1, 56.2) gegen den ersten und den zweiten Leiter (5.01, 5.02) galvanisch isoliert sind, zum Beispiel unter Verwendung von Halleffekt-Sensoren und/oder Riesenmagnetowiderstand-Sensoren.

5. Elektrisches Energieubartragungssystem nach einem der Ansprüche 1 bis 4, **dadurch gekennzeichnet, dass** der Trennschalter (55) einen Festkörperschalter und/oder einen elektromechanischen Schalter umfasst, der entsprechend einem Betriebszustand des Trennschalters (55) in der Lage ist, die Verbindung zwischen der elektrischen Energiequelle (2) und dem ersten sowie dem zweiten Leiter (5.01, 5.02) ein- oder auszuschalten.

6. Elektrisches Energieübertragungssystem nach einem der Ansprüche 1 bis 5, **dadurch gekennzeichnet, dass** mindestens ein Spannungssensor (92, 92) so angeordnet ist, dass er eine Spannung in dem elektrischen Energieübertragungssystem, insbesondere eine Spannung an dem ersten und/oder dem zweiten Leiter (5.01, 5,02) erfasst, wobei die Analyse- und Steuereinheit (57) so ausgelegt ist, dass sie die Spannung analysiert und einen Betriebszustand des Trennschalters (55) steuert und/oder einen Fehlerzustand auf der Basis der Analyse der Spannung anzeigt.

7. Elektrisches Energieübertragungssystem nach Anspruch 1 bis 6, **dadurch gekennzeichnet, dass** die erste Kommunikationsvorrichtung (6.0, 6.1, 6.2) so angeordnet ist, dass sie die Ströme, die zu dem Kommunikationssignal gehören, aus entgegengesetzten Richtungen in den/aus dem ersten und zweiten Leiter oder weitere(n) Leiter(n) (5.01. 5.02, 5.11, 5.12, 5.21, 5.22) koppeln, und die zweite Kommunikationsvorrichtung (6.0, 6.1, 6.2) so angeordnet ist, dass sie die Ströme, die zu dem Kommunikationssignal gehören, aus entgegengesetzten Richtungen aus dem/in den ersten und zweiten Leiter oder weitere(n) Leiter(n) (5.01. 5.02, 5.11, 5.12, 5.21, 5.22) koppeln.

8. Elektrisches Energieübertragungssystem nach Anspruch 1 oder 7, **dadurch gekennzeichnet, dass** eine Vielzahl von Kommunikationsvorrichtungen (6.0, 6.1, 6.2) innerhalb des elektrischen Energieübertragungssystems angeordnet ist, wobei jede Kommunikationsvorrichtung (6.0, 6.1, 6.2) so angeordnet ist, dass sie ein Kommunikationssignal durch das elektrische Energieübertragungsnetz zu einer oder mehreren der anderen Kommunikationsvorrichtungen (6.0, 6.1, 6.2) sendet und/oder davon empfängt.

9. Elektrisches Energieübertragungssystem nach einem der Ansprüche 1 bis 8, **dadurch gekennzeichnet, dass** mindestens eine Kommunikationsvorrichtung (6.0, 6.1, 6.2) einen Transformator (7,0, 7.1, 7.2) zum induktiven Koppeln eines Kommunikationssignals in das und/oder aus dem elektrische(n) Energieübertragungsnetz umfasst.

10. Verfahren zum Übertragen von elektrischer Energie in einem elektrischen Energieübertragungssystem eines Fahrzeugs nach Anspruch 1, wobei elektrische Energie von einer elektrischen Energiequelle (2) durch einen Trennschalter (55) und durch einen ersten Leiter (5.01) zu der elektrischen Einrichtung (3) übertragen wird, wodurch ein elektrischer Rückstrom von dem Chassis (1) des Fahrzeugs zwischen der elektrischen Einrichtung (3) und der elektrischen Energiequelle (2) geleitet wird, wobei:

a) die elektrische Energie zusätzlich von einem zweiten Leiter (5.02) von dem Trennschalter (55) zu der elektrischen Einrichtung (3) übertragen wird, wobei ein erster Strom in dem ersten Leiter (5.01) und ein zweiter Strom in dem zweiten Leiter (5.02) erfasst werden, und
b) der erste und der zweite Strom analysiert werden, um einen Betriebszustand des Trennschalters (55) zu steuern und/oder einen Fehlerzustand anzuzeigen, wodurch zusätzlich ein Kommunikationssignal über das elektrische Energieübertragungssystem übertragen wird,
**dadurch gekennzeichnet, dass**

c) das Kommunikationssignal mit einer ersten Kommunikationsvorrichtung (6.0, 6.1, 6.2) an einem ersten Koppelpunkt in den oder aus dem ersten und zweiten Leiter (5.01, 5.02) gekoppelt wird, und eine mit einer zweiten Kommunikationsvorrichtung (6.0, 6.1, 6.2) an einem zweiten Koppelpunkt aus dem oder in den ersten und zweiten Leiter (5.01, 5.02) gekoppelt wird.

**11.** Verfahren nach Anspruch 10, **dadurch gekennzeichnet, dass** die Ströme, die zu dem Kommunikationssignal gehören, in entgegengesetzten Richtungen in den beziehungsweise aus dem ersten und zweiten Leiter (5.02, 5.02) gekoppelt werden.

**12.** Verfahren nach Anspruch 10 oder 11, **dadurch gekennzeichnet, dass** das Kommunikationssignal durch das elektrische Energieübertragungssystem zwischen einer Vielzahl von Kommunikationsvorrichtungen (6.0, 6.1, 6.2), die innerhalb des elektrischen Energieübertragungsnetzes angeordnet sind, übertragen wird, wobei jede Kommunikationsvorrichtung (6.0, 6.1, 6.2) so angeordnet ist, dass sie das Kommunikationssignal zu einer oder mehreren der anderen Kommunikationsvorrichtungen (6.0, 6.1, 6.2) sendet und/oder davon empfängt.

**13.** System nach einem der Ansprüche 1 bis 9, das einen Energieverteilungskasten (590) umfasst, wobei der Energieverteilungskasten umfasst:

a) einen oder mehrere Trennschalter mit einer PLC-Funktionalität (557.1, 557.2, ... 557.n), von denen jeder mit einem Energieeingang (595) verbunden ist und so ausgelegt ist, dass er die elektrische Eingangsenergie auf einen oder mehrere erste und zweite Ausgänge des Energieverteilungskastens (599.11, 599.12, 599.21, 599.22, ... 599.n1, 599.n2) aufteilt, und so ausgelegt ist, dass er ein Kommunikationssignal zu und/oder aus dem einen oder den mehreren Ausgängen des Energieverteilungskastens (599.11, 599.12, 599.21, 599.22, ... 599.n1, 599.n2) sendet und/oder davon empfängt,
b) ein Datenübertragungssystem, das insbesondere einen Datenkonzentrator (591), ein PLC-Modem (600) und einen PLC-Signalverteiler (601) umfasst, das mit dem einen oder den mehreren Trennschalter(n) mit PLC-funktionalität verbunden ist, um ein Kommunikationssignal zwischen dem insbesondere einen oder den mehreren Trennschalter(n) mit PLC-Funktionalität (557.1, 557.2, ... 557.n) und einer Datenschnittstelle (592) zu übertragen.

**14.** System nach einem der Ansprüche 1 bis 9 oder 13, das eine elektrischen Einrichtung mit einer PLC-Funktionalität (73.1) umfasst, die so angeordnet ist, dass sie:

a) elektrische Energie, die an einem ersten und einem zweiten Eingang (110.1, 110.2) empfangen wird, kombiniert und die kombinierte elektrische Energie zu einem spezifischen Anwendungs-Subsystem (104) überträgt, das mit einer elektrischen Einrichtung (3.1) verbindbar ist oder eine solche umfasst, und
b) ein Kommunikationssignal zwischen dem ersten und dem zweiten Eingang (110.1, 110.2) und dem spezifischen Anwendungs-Subsystem (104) sowie vorzugsweise der elektrischen Einrichtung (3.1) überträgt, insbesondere durch einen Transformator (7.1).

**15.** System nach Anspruch 14, **dadurch gekennzeichnet, dass** in der elektrischen Einrichtung mit PLC-Funktionalität (73.1) ein erster und ein zweiter Stromsensor (56.1, 56.2) so angeordnet sind, dass sie einen Strom erfassen, der an dem ersten und dem zweiten Eingang (110.1, 110.2) empfangen wird, wobei eine Steuereinheit (101) so ausgelegt ist, dass sie die erfassten Ströme analysiert und das spezifische Anwendungs-Subsystem ausschaltet und/oder einen Fehlerzustand auf der Basis der Analyse anzeigt.

**Revendications**

**1.** Système de transmission d'énergie électrique pour un véhicule, destiné à délivrer de l'énergie électrique depuis une source d'énergie électrique (2) à un appareil électrique (3), un disjoncteur (55) étant raccordé entre la source d'énergie électrique (2) et un premier conducteur (5.01), lequel est en plus raccordé à l'appareil électrique (3), la source d'énergie électrique (2) et l'appareil électrique (3) étant raccordés au châssis (1) du véhicule, lequel fait office de conducteur pour conduire un courant électrique entre l'appareil électrique (3) et la source d'énergie électrique (2), système dans lequel :

a) un deuxième conducteur (5.02) est raccordé entre le disjoncteur (55) et l'appareil électrique (3), les premier et deuxième conducteurs (5.01, 5.02) étant électriquement isolés et branchés en parallèle, les premier et deuxième conducteurs (5.01, 5.02) étant conçus pour transmettre tous deux l'énergie électrique de la source d'énergie électrique (2),

b) un premier détecteur de courant (56.1) est conçu pour détecter un premier courant dans le premier conducteur (5.01) et un deuxième détecteur de courant (56.2) est conçu pour détecter un deuxième courant dans le deuxième conducteur (5.02), et

c) une unité d'analyse et de commande (57) est conçue pour analyser les premier et deuxième courants et pour commander un état de fonctionnement du disjoncteur (55) et/ou pour indiquer un état de défaut en se basant sur l'analyse des premier et deuxième courants,

**caractérisé en ce que**

d) un premier dispositif de communication (6.0, 6.1, 6.2) est disposé à un premier point de connexion afin de connecter un signal de communication respectivement dans les/hors des premier et deuxième conducteurs (5.01, 5.02) et/ou premier et deuxième conducteurs supplémentaires (5.11, 5.12, 5.21, 5.22), et

e) un deuxième dispositif de communication (6.0, 6.1, 6.2) est disposé à un deuxième point de connexion afin de connecter un signal de communication respectivement dans les/hors des premier et deuxième conducteurs (5.01, 5.02) et/ou premier et deuxième conducteurs supplémentaires (5.11, 5.21, 5.21, 5.22).

2. Système de transmission d'énergie électrique selon la revendication 1, **caractérisé en ce que** le premier conducteur (5.01) et le deuxième conducteur (5.02) possèdent des propriétés sensiblement identiques, notamment des matériaux conducteurs, des sections transversales, des longueurs et des isolations électriques.

3. Système de transmission d'énergie électrique selon la revendication 1 ou 2, **caractérisé en ce que** le premier conducteur (5.1) est raccordé à un premier distributeur (4.1) et le deuxième conducteur (5.2) est raccordé à un deuxième distributeur (4.2), les premier et deuxième conducteurs supplémentaires (5.11, 5.12, 5.21, 5.22) étant raccordés entre les premier et deuxième distributeurs (4.1, 4.2) et à des appareils électriques supplémentaires (3.1, 3.2).

4. Système de transmission d'énergie électrique selon l'une des revendications 1 à 3, **caractérisé en ce que** les premier et deuxième détecteurs de courant (56.1, 56.2) sont isolés galvaniquement des premier et deuxième conducteurs (5.01, 5.02), par exemple en utilisant des capteurs à effet Hall et/ou des capteurs à magnétorésistance géante.

5. Système de transmission d'énergie électrique selon l'une des revendications 1 à 4, **caractérisé en ce que** le disjoncteur (55) comprend un commutateur semiconducteur et/ou un commutateur électromécanique qui, suivant un état de fonctionnement du disjoncteur (55), est capable de mettre en circuit ou hors circuit la connexion entre la source énergie électrique (2) et le premier ainsi que le deuxième conducteur (5.01, 5.02).

6. Système de transmission d'énergie électrique selon l'une des revendications 1 à 5, **caractérisé en ce qu'**au moins un détecteur de tension (92, 92) est conçu pour détecter une tension dans le système de transmission d'énergie électrique, notamment une tension sur le premier et/ou le deuxième conducteur (5.01, 5.02), l'unité d'analyse et de commande (57) étant adaptée pour analyser la tension et pour commander un état de fonctionnement du disjoncteur (55) et/ou pour indiquer un état de défaut en se basant sur l'analyse de la tension.

7. Système de transmission d'énergie électrique selon l'une des revendications 1 à 6, **caractérisé en ce que** le premier dispositif de communication (6.0, 6.1, 6.2) est conçu pour injecter/extraire depuis des directions opposées les courants se rapportant au signal de communication entrant dans les /sortant des premier et deuxième conducteurs ou conducteurs supplémentaires (5.01, 5.02, 5.11, 5.12, 5.21, 5.22) et le deuxième dispositif de communication (6.0, 6.1, 6.2) est conçu pour injecter/extraire depuis des directions opposées les courants se rapportant au signal de communication sortant des/entrant dans les premier et deuxième conducteurs ou conducteurs supplémentaires (5.01, 5.02, 5.11, 5.12, 5.21, 5.22).

8. Système de transmission d'énergie électrique selon la revendication 1 ou 7, **caractérisé en ce qu'**une pluralité de dispositifs de communication (6.0, 6.1, 6.2) est disposée à l'intérieur du système de transmission d'énergie électrique, chaque dispositif de communication (6.0, 6.1, 6.2) étant conçu pour envoyer et/ou recevoir un signal de communication à travers le réseau de transmission d'énergie électrique vers/depuis un ou plusieurs des autres dispositifs de communication (6.0, 6.1, 6.2).

9. Système de transmission d'énergie électrique selon l'une des revendications 1 à 8, **caractérisé en ce qu'**au moins un dispositif de communication (6.0, 6.1, 6.2) comprend un transformateur (7.0, 7.1, 7.2) pour le couplage inductif d'un signal de communication dans le/hors du réseau de transmission d'énergie électrique.

10. Procédé de transmission d'énergie électrique dans un système de transmission d'énergie électrique pour un vésicule selon la revendication 1, l'énergie électrique étant transmise depuis une source d'énergie électrique (2) à l'appareil électrique (3) à travers un disjoncteur (55) et à travers un premier conducteur (5.01), un courant électrique de retour étant conduit par le châssis (1) du véhicule entre l'appareil électrique (3) et la source d'énergie électrique (2), procédé dans lequel :

a) l'énergie électrique est transmise en plus par un deuxième conducteur (5.02) depuis le disjoncteur (55) à l'appareil électrique (3), un premier courant dans le premier conducteur (5.01) et un deuxième courant dans le deuxième conducteur (5.01, 5.02) étant détectés, et
b) les premier et deuxième courants étant analysés afin de commander un état de fonctionnement du disjoncteur (55) et/ou indiquer un état de défaut, un signal de communication étant transmis en plus sur le système de transmission d'énergie électrique,
**caractérisé en ce que**
c) le signal de communication est connecté dans les/hors des premier et deuxième conducteurs (5.01, 5.02) avec un premier dispositif de communication (6.0, 6.1, 6.2) à un premier point de connexion et connecté hors des ou dans les premier et deuxième conducteurs (5.01, 5.02) avec un deuxième dispositif de communication (6.0, 6.1, 6.2) à un deuxième point de connexion.

11. Procédé selon la revendication 10, **caractérisé en ce que** les courants se rapportant au signal de communication sont connectés dans le respectivement hors du premier et deuxième conducteur (5.01, 5.02) dans des directions opposées.

12. Procédé selon la revendication 10 ou 11, **caractérisé en ce que** le signal de communication est transmis à travers le système de transmission d'énergie électrique entre une pluralité de dispositifs de communication (6.0, 6.1, 6.2) disposés à l'intérieur du réseau de transmission d'énergie électrique, chaque dispositif de communication (6.0, 6.1, 6.2) étant disposé pour envoyer et/ou recevoir le signal de communication vers/depuis un ou plusieurs des autres dispositifs de communication (6.0, 6.1, 6.2).

13. Système selon l'une des revendications 1 à 9, comprenant un coffret de distribution d'énergie (590), dans lequel le coffret de distribution d'énergie comprend :

a) un ou plusieurs disjoncteurs possédant une fonctionnalité d'API (557.1, 557.2, ..., 557.n), chacun raccordé à une entrée d'énergie (595) et adapté pour fractionner l'énergie électrique d'entrée sur une ou plusieurs premières et deuxièmes sorties du coffret de distribution d'énergie (599.11, 599.12, 599.21, 599.22, ..., 599.n1, 599.n2) et adapté pour émettre et/ou recevoir un signal de communication sur et/ou depuis la ou les plusieurs premières et deuxièmes sorties du coffret de distribution d'énergie (599.11, 599.12, 599.21, 599.22, ..., 599.n1, 599.n2),
b) un système de transmission de données, comprenant notamment un concentrateur de données (591), un modem d'API (600), et un distributeur de signal d'API (601), qui est raccordé à le ou aux plusieurs disjoncteurs possédant une fonctionnalité d'API afin de transmettre un signal de communication entre ledit un particulier ou les plusieurs disjoncteurs possédant une fonctionnalité d'API (557.1, 557.2, ..., 557.n) et une interface de données (592).

14. Système selon l'une des revendications 1 à 9 ou 13, comprenant un appareil électrique possédant une fonctionnalité d'API (73.1), qui est conçu pour :

a) combiner l'énergie électrique reçue au niveau d'une première et d'une deuxième entrée (110.1, 110.2) et transmettre l'énergie électrique combinée à un sous-système à application spécifique (104) qui peut être connecté à ou qui comprend un appareil électrique (3.1), et
b) transmettre, notamment à travers un transformateur (7.1), un signal de communication entre la première et la deuxième entrée (110.1, 110.2) et le sous-système à application spécifique (104) ainsi que de préférence à l'appareil électrique (3.1).

15. Système selon la revendication 14, **caractérisé en ce que** dans l'appareil électrique possédant une fonctionnalité d'API (73.1), un premier et un deuxième détecteur de courant (56.1, 56.2) sont disposés de manière à détecter un courant reçu sur la première et la deuxième entrée (110.1, 110.2), une unité de commande (101) étant adaptée pour analyser les courants détectés et pour mettre hors circuit le sous-système à application spécifique et/ou pour indiquer un état de défaut en se basant sur l'analyse.

Fig. 1

Fig. 2

**Fig. 3**

**Fig. 4**

**Fig. 5**

**Fig. 6**

**Fig. 7**

Fig. 8

**Fig. 9**

**Fig. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20010029433 A1

- EP 09405178 A

**Non-patent literature cited in the description**

- **THOMAS E. POTTER ; MICHAEL LAVADO, P.E.** Arc Fault Circuit Interruption Requirements for Aircraft Applications. Texas Instruments